# EUROPEAN PATENT SPECIFICATION

(11) **EP 4 633 529 B1**
(45) Date of publication and mention of the grant of the patent: **07.10.2026**
(21) Application number: 23847667.5
(22) Date of filing: 11.12.2023
(51) Int. Cl.: A61C 7/00, A61C 13/00

(54) **TECHNIQUES FOR IDENTIFYING ANATOMICAL DENTAL FEATURE POINTS AND RELATED SYSTEMS AND METHODS**
VERFAHREN ZUR IDENTIFIZIERUNG ANATOMISCHER ZAHNMERKMALSPUNKTE SOWIE ZUGEHÖRIGE SYSTEME UND VERFAHREN
TECHNIQUES D'IDENTIFICATION DE POINTS CARACTÉRISTIQUES DENTAIRES ANATOMIQUES, ET SYSTÈMES ET PROCÉDÉS ASSOCIÉS

(30) Priority: 12.12.2022 US 202263431863 P
(43) Date of publication of application: 22.10.2025
(73) Proprietor: Lightforce Orthodontics, Inc., Wilmington, MA 01887 (US)
(72) Inventor: LEE, Jinho, Belmont, MA 02478 (US); YARMARKOVICH, Alexander, Swampscott, MA 01907 (US)
(74) Representative: Eisenführ Speiser
(86) International application number: PCT/US2023/083454
(87) International publication number: WO 2024/129623

(56) References cited:
- US-A1- 2014 229 145
- US-A1- 2018 360 567
- US-B2- 11 020 205

## Description

### FIELD

The present application relates generally to determining the positions of anatomical dental feature points for use in orthodontic procedures.

### BACKGROUND

Orthodontic procedures involve orthodontic appliances such as braces, which apply static mechanical forces on the teeth to induce bone remodeling and facilitate alignment. Orthodontic treatment planning may utilize 3D models of a patient's teeth to create a treatment plan for the patient, which may for instance include determining where to place brackets for a set of braces. During a planning process, it may be advantageous to identify the locations of certain anatomical features on the teeth, allowing the orthodontist or other treatment planner to apply orthodontic rules and/or principles in determining treatment.

US 2018/0360567 discloses systems and methods for detecting the eruption state (e.g., tooth type and/or eruption status) of a target tooth. A patient's dentition may be scanned and/or segmented. A target tooth may be identified. Dental features, principal component analysis (PCA) features, and/or other features may be extracted and compared to those of other teeth, such as those obtained through automated machine learning systems. A detector can identify and/or output the eruption state of the target tooth, such as whether the target tooth is a fully erupted primary tooth, a permanent partially erupted/un-erupted tooth, or a fully erupted permanent tooth.

US 2014/0229145 discloses the creation of a three-dimensional computer model of the patient's tooth, including the pulp chamber and root canals, by combining at least one grey value image of the tooth and/or surface information about at least part of the intra-oral visible part of the tooth with a statistical, parameterized shape model of each tooth type (upper or lower incisors, premolars, molars) as the patient's tooth is treated. This allows for planning and/or simulation of one or more root canal treatments on the computer model of the patient's tooth and the dentist or dental specialist is given qualitative and/or quantitative information by the system in order to aid in adequately analyzing the risks related to performing the root canal treatment with the proposed or user-selected endodontic tools.

### SUMMARY

The invention is as defined in the appended claims.

According to some aspects, a computer-implemented method is provided of determining positions of a plurality of feature points of a patient's tooth based on a statistical tooth model, the method comprising using at least one processor determining values of a plurality of parameters of the statistical tooth model by comparing a three-dimensional (3D) model of a reference tooth, which has a shape parametrized by the plurality of parameters, to a 3D model of a patient's tooth, determining positions of a plurality of feature points for the patient's tooth based at least in part on a plurality of feature points associated with the statistical tooth model, and at least in part on the determined values of the plurality of parameters of the statistical tooth model, and associating the plurality of feature points for the patient's tooth with the 3D model of the patient's tooth according to the determined positions of the plurality of feature points.

According to some aspects, at least one computer readable medium is provided comprising instructions that, when executed by at least one processor, perform a method of determining positions of a plurality of feature points of a patient's tooth based on a statistical tooth model, the method comprising determining values of a plurality of parameters of the statistical tooth model by comparing a three-dimensional (3D) model of a reference tooth, which has a shape parametrized by the plurality of parameters, to a 3D model of a patient's tooth, determining positions of a plurality of feature points for the patient's tooth based at least in part on a plurality of feature points associated with the statistical tooth model, and at least in part on the determined values of the plurality of parameters of the statistical tooth model, and associating the plurality of feature points for the patient's tooth with the 3D model of the patient's tooth according to the determined positions of the plurality of feature points.

According to some aspects, a system is provided comprising at least one processor, and at least one computer readable medium comprising instructions that, when executed by the at least one processor, perform a method of determining positions of a plurality of feature points of a patient's tooth based on a statistical tooth model, the method comprising determining values of a plurality of parameters of the statistical tooth model by comparing a three-dimensional (3D) model of a reference tooth, which has a shape parametrized by the plurality of parameters, to a 3D model of a patient's tooth, determining positions of a plurality of feature points for the patient's tooth based at least in part on a plurality of feature points associated with the statistical tooth model, and at least in part on the determined values of the plurality of parameters of the statistical tooth model, and associating the plurality of feature points for the patient's tooth with the 3D model of the patient's tooth according to the determined positions of the plurality of feature points.

The foregoing apparatus and method embodiments may be implemented with any suitable combination of aspects, features, and acts described above or in further detail below. These and other aspects, embodiments, and features of the present teachings can be more fully understood from the following description in conjunction with the accompanying drawings.

### BRIEF DESCRIPTION OF DRAWINGS

Various aspects and embodiments will be described with reference to the following figures. It should be appreciated that the figures are not necessarily drawn to scale. In the drawings, each identical or nearly identical component that is illustrated in various figures is represented by a like numeral. For purposes of clarity, not every component may be labeled in every drawing.
FIG. 1 depicts a model of a patient's tooth with identified feature points, according to some embodiments;
FIG. 2 is a conceptual block diagram illustrating a process of determining positions of feature points for a patient's tooth, according to some embodiments;
FIG. 3 is a flowchart of a method of determining positions of feature points for a patient's tooth;
FIG. 4 is a flowchart of a method of building a statistical tooth model, according to some embodiments;
FIG. 5 is a flowchart of a method of generating a root portion of a patient's tooth, according to some embodiments;
FIGs. 6A-6B depict closing of an open model of a patient's tooth, according to some embodiments;
FIG. 7 depicts a tooth portion and a root portion of a tooth model, according to some embodiments; and
FIG. 8 depicts a block diagram of an illustrative computing device which may be suitable for performing certain embodiments described herein.

### DETAILED DESCRIPTION

Orthodontics has been widely adapted in clinics to correct malocclusion and straighten teeth. The traditional method using braces employs preformed brackets adhered onto teeth, with elastic metal wires running through the bracket slots to provide a driving force on the teeth. The adaptation of the bracket to the individual tooth is performed by filling the gap between the tooth surface and bracket surface with adhesive. This bonds the bracket to the tooth such that the bracket slot, when the teeth are moved to their final position, lies in a near-flat plane.

As described above, when planning an orthodontic procedure such as the placement of brackets for braces, it may be advantageous to identify the locations of certain anatomical features on the teeth. These locations may, for instance, be medically significant locations or 'landmark points' that act as helpful reference points for orthodontic planning. For example, suitable anatomical feature locations (hereinafter, "feature points") may include premolar cusps, molar cusps, facial axis points, marginal points, and/or centroid points. One advantageous use of feature points is in configuring an orthodontic treatment planning application to perform various automated operations based on the feature points. For instance, in some cases, an orthodontic treatment planning application may generate bracket placements for a patient based on the positions of feature points on 3D models of the patient's teeth.

However, identifying the positions of feature points is a time consuming process and may require significant expertise by a medical professional to accurately place the feature points. For instance, it may be desirable to identify the positions of around 6 to 12 feature points for each tooth, so that the positions of around 200 to 300 feature points are identified for all of the teeth. Each of these feature points may need to be placed by the medical professional on a 3D model (hereinafter, "model") of a respective tooth to within a fraction of a millimeter. Moreover, each tooth is unique, and as such the feature point arrangement for each tooth is also unique, making it generally not possible to copy feature points from one tooth to another. Thus, determining the positions of feature points is conventionally a laborious and technical manual process.

The inventors have recognized and appreciated techniques for automating the placement of feature points on a model of a patient's tooth. The techniques include building a statistical model that parametrizes the shape of a model of a reference tooth, and determining parameters that transform the shape of the model of the reference tooth into a shape matching that of the model of the patient's tooth. Feature points may be associated with the model of the reference tooth and transformed in a similar manner based on the determined parameters, thereby identifying positions for feature points on the model of the patient's tooth. The feature points for the model of the patient's tooth can then be used in subsequent orthodontic treatment planning as described above.

According to some embodiments, the statistical model may be generated using a training data set comprising a plurality of models of teeth taken from a plurality of different patients, with the teeth being of the same type (e.g., incisor, canine, premolar or molar). The models of the teeth may have associated feature points having positions that were determined manually, or otherwise. An analysis may be performed that generates parameters that parameterize the shape of the teeth models in the training data set, such as a principal component analysis (PCA) analysis, or any other analysis that reduces the dimensionality of the training data set. The resulting statistical model and its parameters represents the variety of the different shapes of teeth observed in the training data set, with the parameters providing a way to vary the shape of a reference model to produce the shape of any of the teeth in the training data set (or an approximation thereof). The feature points may be associated with particular points on the geometry on this parameterized model, and as such by finding the parameters that transform the reference model to reproduce the shape of a patient's tooth, the locations of the feature points on this tooth may also be determined.

According to some embodiments, the statistical model may include or otherwise describe a 'canonical' tooth model that represents an initial state of the reference model, against which a patient's tooth model is compared to determine feature points for the patient's tooth. This canonical tooth model may, for example, represent an average shape of the plurality of models in the training data set (e.g., a shape resulting from the mean values of all the parameters of the statistical model).

According to some embodiments, the reference tooth model of the statistical model may include a root portion. Some orthodontic planning processes may utilize optical scans of patient's teeth, which produce models that represent only portions of the teeth that are exposed above the gum. For some orthodontic procedures it may be advantageous to consider the locations of the roots of the teeth, yet to obtain models of the roots of a patient's teeth more involved scanning (e.g., panoramic X ray, cephalometric projection, or CBCT scan) is conventionally necessary. Using the techniques described herein, however, a root portion may be included in the reference tooth model and a 3D model representing the root portion of the patient's tooth may be generated using the statistical model without it being necessary to perform scanning of the patient's roots. The reference model may include a root that is generated based on the models in the training data set including root portions, or generated in some other manner.

Following below are more detailed descriptions of various concepts related to, and embodiments of, techniques for determining positions of a plurality of feature points for a model of a patient's tooth. It should be appreciated that various aspects described herein may be implemented in any of numerous ways. Examples of specific implementations are provided herein for illustrative purposes only. In addition, the various aspects described in the embodiments below may be used alone or in any combination, and are not limited to the combinations explicitly described herein.

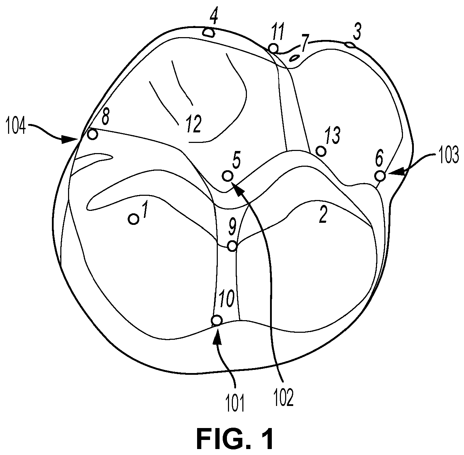

For purposes of illustration, FIG. 1 depicts a model of a patient's tooth with several feature points marked on it. Each of the feature points are identified by a point in 3-dimensional space relative to the tooth, and in the example of FIG. 1 the points are depicted with a numerical identifier. For instance, feature point 101 (also labeled '10') is positioned on the side of the depicted molar tooth on its surface. Feature point 102 (also labeled '5') is positioned at the cusp of the molar tooth. The feature points 103 and 104 (also labeled '6' and '8' respectively) are marginal ridge points.

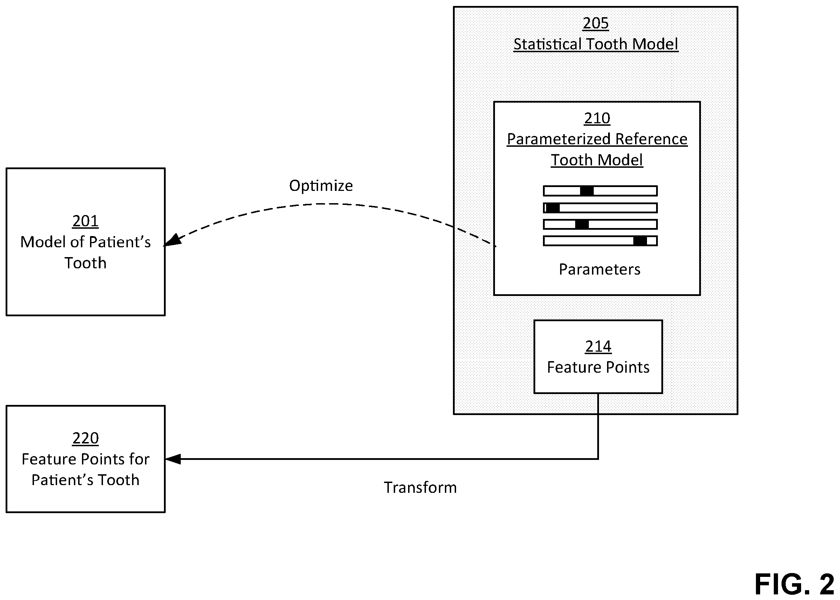

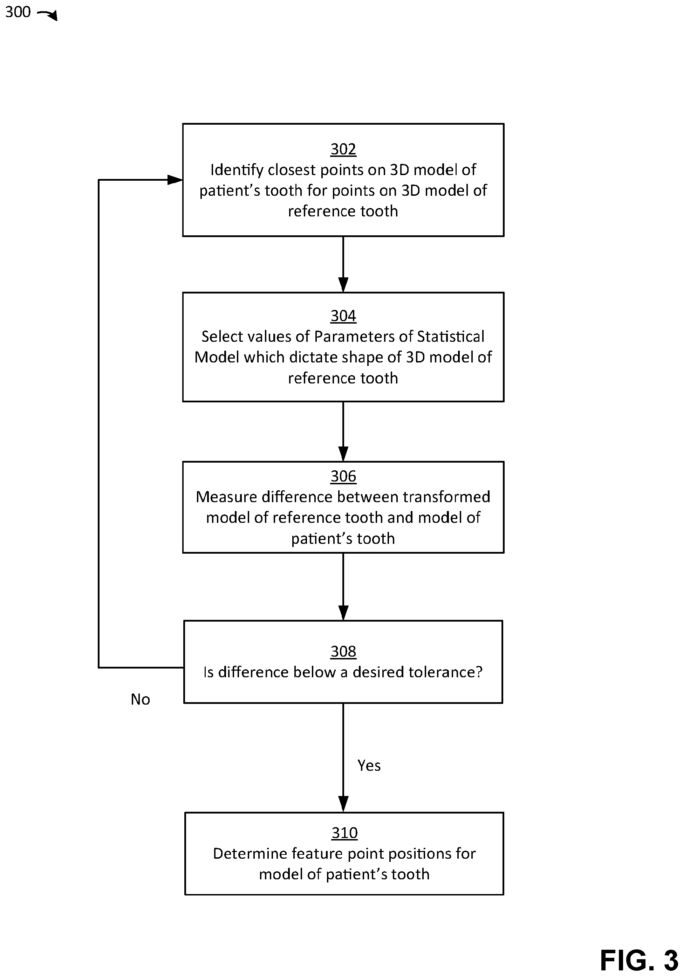

As described above, positions of feature points for a patient's tooth may be determined using a statistical model that parametrizes the shape of a reference tooth model, and by determining values of parameters that transform the shape of the reference tooth model into a shape matching that of a model of the patient's tooth. FIG. 2 is a conceptual block diagram illustrating such a process, according to some embodiments. FIG. 3 is a flowchart of a method of determining positions of feature points for a patient's tooth, according to some embodiments, and is described further below.

In the example of FIG. 2, positions of feature points 220 are determined based on a model of a patient's tooth 201. The statistical tooth model 205 includes a parameterized reference tooth 210 with a plurality of associated parameters which, when varied, change the shape of the reference tooth. Via a suitable analysis technique, the parameter values that produce a shape of the reference tooth that approximates the shape of the model of the patient's tooth 201 may be found. The statistical model 205 may also include, or be otherwise associated with, a plurality of feature points 214. The feature points 214 may be associated with positions relative to the reference tooth model and/or may themselves be parameterized by the parameters of the reference tooth model 210. Once the parameters of the reference tooth model 210 are determined, positions of the feature points 214 according to the determined parameters may be determined, and these positions 220 may be associated with the model of the patient's tooth 201.

According to some embodiments, the 3D model of the patient's tooth 201 may have been generated using a suitable optical scanner operated by a dental professional by capturing images of the patient's teeth, or may be otherwise generated based on data obtained from a scan of the teeth. In some embodiments, the model of the patient's tooth 201 may be generated from a model of a plurality of the patient's teeth, and by manually and/or automatically selecting geometrical data corresponding to one tooth from that model.

According to some embodiments, the 3D model of the patient's tooth 201 may not include a root portion. If the model was generated from a handheld optical scanner, for instance, the model may only represent portions of the tooth that are exposed above the gum, and may not include a root portion. Such a model may be provided as input to the system of FIG. 2 (and utilized in the method of FIG. 3) with an open structure, or may be modified to have a closed structure (illustrative techniques for which are described below). In some embodiments, the 3D model of the patient's tooth 201 may include a root portion, as described further below.

According to some embodiments, statistical tooth model 205 may correspond to a particular type of tooth. Tooth types, as referred to herein, may include broad categories such as incisor, canine, premolar, or molar, as well as narrow categories (e.g., upper incisor, lower right premolar) or specific individual teeth (e.g., upper left central incisor, rearmost lower left molar). In general, a system may include a plurality of statistical tooth models 205 that each correspond to a different type of tooth, so that generating feature points for a given tooth of a patient may comprise first identifying the type of tooth of the patient, and selecting an appropriate statistical model to match that type of tooth.

According to some embodiments, the parameters of the parametrized reference tooth model 210 may be, or may include, principal components of a principal component analysis (PCA) model. Alternatively, the parameters may be parameters of any suitable model that can represent a data set (in this case the variety of shapes in a plurality of teeth models in a training data set) with reduced dimensionality.

A "3D model" (or simply "model") as referred to herein may include any data describing a three-dimensional structure or structures, irrespective of file format or number of data files. Moreover, a model may be represented in numerous ways, and are not limited to polygonal models, but may include any way of representing a three-dimensional structure, including point clouds, shell models, volumetric or displacement models, etc.

FIG. 3 is a flowchart of a method of determining positions for a plurality of feature points of a patient tooth based on a statistical tooth model, according to some embodiments. Method 300 may be performed by a suitable computing system, examples of which are described below. Method 300 may be initiated in response to user input provided to the computing system, such as the user interacting with a suitable control in a graphical user interface (e.g., by clicking on a "calculate feature points" button).

Method 300 is arranged as an iterative loop in which acts 302, 304, 306 and 308 are repeated with various different values selected for the parameters of the statistical model, until the desired parameter values are obtained. Subsequently, the positions of feature points for the model of the patient's tooth are determined in act 310 according to the determined parameter values.

In act 302, the system executing method 300 compares a model of a patient's tooth with a reference tooth of a statistical model. As described above, the model of the patient's tooth may have been generated through a scan to produce a geometrical 3D model, and the model of the reference tooth may be part of (or otherwise associated with) a statistical model whereby adjusting values of one or more parameters of the statistical model adjusts the shape of the reference tooth. Act 302 comprises identifying, for a plurality of positions on the reference model, the closest position on the patient's tooth model.

According to some embodiments, act 302 may comprise at least part of an iterative closest point (ICP) process, wherein the model of the patient's tooth and model of the reference tooth are represented by respective point clouds In this process, the closest point in the patient tooth point cloud is found for each of a plurality of points in the reference tooth point cloud. Act 302 may comprise generating a point cloud from the model of the patient's tooth and/or generating a point cloud from the reference model for use in such a process.

In act 304, the system executing method 300 selects values for the parameters of the statistical model, such that the shape of the reference model may be changed. These values may be selected based at least in part on values previously selected in previous iterations through act 304. According to some embodiments, parameters of the statistical model may be selected by projecting the closest points identified in act 302 to the reference model.

According to some embodiments, the parameters for which values are selected in act 304 may be principal components of a principal component analysis (PCA) model. The values of the parameters (e.g., PCA principal components) may, for instance, control the positions of a plurality of points in a point cloud that represents the shape of the reference tooth. In some embodiments, the parameters may be selected in act 304 by solving a linear system b=Ax, where b is a vector of the closest points identified in act 302, A is a 2D matrix having column vectors that are the principal components of the PCA model, and x is a vector of the parameters. In some cases, x could be computationally determined by performing a matrix multiplication such as x=A'b, wherein A' is the transpose of A (which may be possible due to the principal components being orthonormal to one another).

In act 306, the system executing method 300 determines a measure that reflects the extent of the difference between the reference tooth model with the parameter values selected in act 304 and the patient's tooth model. For instance, a comparatively smaller difference measure may reflect more similar models than a comparatively larger measure. According to some embodiments, the measure may be calculated based on distances between the closest points identified in act 302. For example, the measure may be calculated as the sum of the squares of each of these distances.

According to some embodiments, act 306 may comprise determining the difference between the reference tooth model with the parameter values selected in act 304 and the patient's tooth model in an iteration i as the Euclidean distance between two N-dimensional vectors of two point clouds (representing the reference tooth model and the patient's tooth model): **Dᵢ** = ∥ **Tᵢ** - **Rᵢ** ∥, where **Tᵢ** represents the point cloud for the patient's tooth model and **Rᵢ** represents the point cloud for the reference tooth model.

In act 308, the system executing method 300 compares the difference measure determined in act 306 with a threshold value. If the measure is below the threshold, the values of the parameters selected in act 304 produced a reference tooth model with a shape that is sufficiently similar to the patient's tooth model. Otherwise, acts 302, 304 and 306 are repeated iteratively until the difference measure falls below this threshold. When act 302 is repeated, the reference tooth model used to identify the closest points on the patient's tooth model may be shaped according to the values of the parameters selected in act 304 in the previous iteration of acts 302, 304 and 306. As a result, the set of points identified on the patient's tooth model in act 302 may be different to the set of points that were identified in the previous iteration of act 302, because the shape of the reference model has changed.

According to some embodiments, act 308 may comprise comparing: (i) the difference between the reference tooth model with the parameter values selected in act 304 and the patient's tooth model; and (ii) the difference between the reference tooth model with the parameter values selected in the previous iteration of act 304 and the patient's tooth model. That is, the extent to which further iterations are reducing the difference between the reference tooth model and the patient's tooth model may be determined in act 308. For instance, when act 306 comprises calculating the Euclidean difference **Dᵢ** in an iteration i, act 308 may comprise comparing **Dᵢ** to **Dᵢ₋₁**. For example, the difference may be considered to be below a desired tolerance in act 308 when **Dᵢ** - **Dᵢ₋₁** is less than a threshold value (e.g., if**Dᵢ** - **Dᵢ₋₁** < x, method 300 returns to act 302, otherwise method 300 progresses to act 310.

In act 310, the system executing method 300 determines the positions of a plurality of feature points for the model of the patient's tooth based on the optimization process of acts 302, 304, 306 and 308.

In some embodiments, a plurality of feature points may be associated with the reference tooth model (or a point cloud or other data representing the model), such that the shape of the reference tooth model with the determined values of the parameters of the statistical model indicates the positions of the feature points on the patient's tooth model. For example, a particular vertex or other designated location on the reference model may be identified as a feature point, and the position of each of these locations identified on the reference tooth model having a shape according to the determined values of the parameters of the statistical model. As such, determination of the positions of feature points in act 310 may not necessarily comprise additional calculations of the positions of these points, but may instead comprise identifying the positions of particular locations in the reference model as determined feature point locations.

In some embodiments, a plurality of feature points may be associated with an initial shape for the reference tooth (e.g., a 'canonical' shape as described above), and the positions of these points may be transformed based on the determined values of the parameters of the statistical model. For example, the reference tooth model may be represented by a point cloud that includes (or is otherwise associated with) points that are identified as feature points. The positions of these points in the point cloud of the reference model, when the reference model has a shape according to the determined values of the parameters of the statistical model, may indicate positions of the feature points on the model of the patient's tooth.

According to some embodiments, method 300 may comprise, subsequent to act 310, associating the feature points and/or the positions determined in act 310 with the model of the patient's tooth. Such an act may comprise storing data indicating the positions of each of the plurality of feature points, and associating such data with the model of the tooth so that a suitable orthodontic treatment planning application may utilize the data representing the feature points positions in subsequent treatment planning activities (e.g., displaying the model of the patient's tooth with the feature points overlaid, as shown in FIG. 1, calculating bracket positions based on the feature point positions, etc.).

It may be appreciated that method 300 represents an illustrative approach for determining values for parameters of a statistical tooth model, and the techniques described herein are not limited to this particular approach. In general, any suitable method that optimizes values of parameters that control the shape of a reference tooth as shown in FIG. 2 and described above, may be employed.

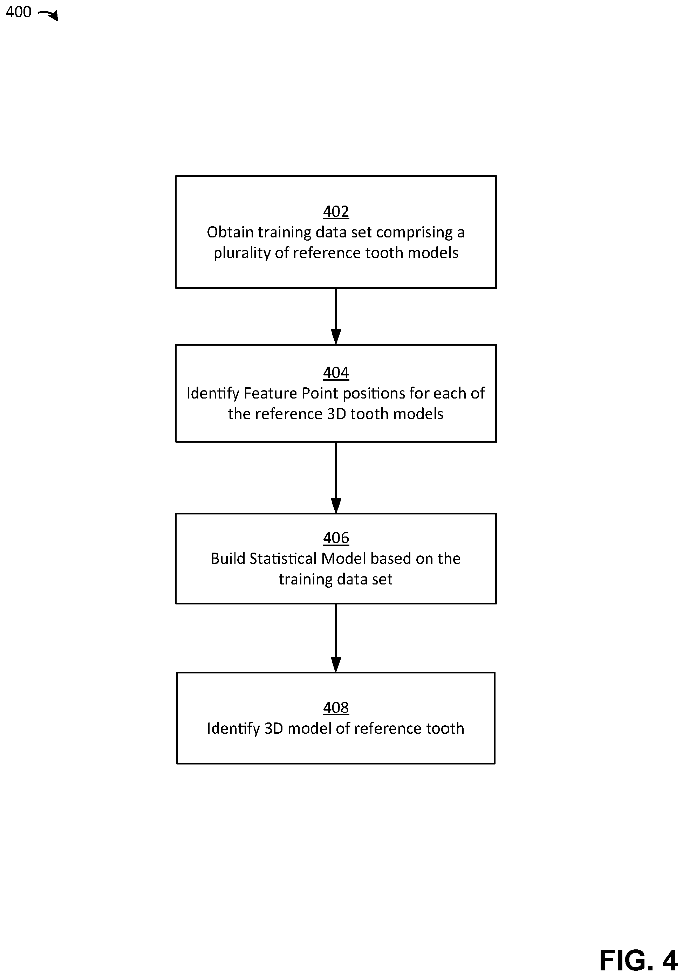

FIG. 4 is a flowchart of a method of building a statistical tooth model, according to some embodiments. Method 400 may be performed by a suitable computing system, examples of which are described below.

In act 402, the system executing method 400 obtains a training data set comprising a plurality of tooth models. In some embodiments, the tooth models may all be of a first type, such that the statistical model is built for a tooth of the first type. For example, the tooth models of the training data set may all be incisor tooth models. The models obtained in act 402 may each include, for example, a polygonal model or a point cloud that represents a tooth shape.

In act 404, the system executing method 400 selects positions of feature points for each of the tooth models in the training data set obtained in act 402. In some embodiments, the positions may be selected manually by a user. For example, a user may utilize a graphical user interface (GUI) of a suitable application to place feature points on the models of teeth from the training data set. In some cases, positions of feature points may be selected semi-automatically, as described below.

In act 406, the system executing method 400 builds a statistical model with one or more parameters whose values can be varied to reproduce the shapes of the teeth in the training data set. Any suitable statistical shape modeling technique may be applied in act 406, including but not limited to PCA and/or K-mean clustering. According to some embodiments, act 406 may comprise generating a point cloud for one or more models from the training data set.

According to some embodiments, act 406 may comprise generating a plurality of orthonormal eigenvectors ***uᵢ*** through a PCA analysis. For example, based on N training data samples each comprising a point cloud of M 3-dimensional points, a plurality of orthonormal eigenvectors may be generated through a PCA analysis. The statistical model generated in act 406 may thereby express a point cloud p for a tooth as a linear combination of *k* of the eigenvectors as: $p = c + {\sum }_{i = 0}^{k} {α}_{i} {u}_{i}$ where c is the mean point cloud of the N training data samples, and *αᵢ* are the parameters of the statistical model (i.e., the parameters that are optimized in method 300).

In act 408, the system executing method 400 identifies a 3D model of a reference tooth. The reference tooth model may be utilized when determining positions of feature points of a patient's tooth, for instance as described above in relation to method 300 shown in FIG. 3. According to some embodiments, the reference tooth model may be a representative model from the training data set; in such cases, act 408 may comprise selecting an existing model rather than generating a new model. According to some embodiments, the reference tooth may represent an average shape of the plurality of models in the training data set (e.g., a shape resulting from the mean values of all the parameters of the statistical model).

In some embodiments, method 400 may be performed multiple times in a semi-automated approach as follows. Initially, method 400 may be performed with a first portion of a training data set as described above to produce a first statistical model. Subsequently, the first statistical model may be applied to a plurality of teeth models from a second portion of the training data set to automatically determine positions of feature points for the teeth models in the second portion of the training data set. A user may then inspect the automatically determined positions for these feature points, and modify them as needed where the feature point positions are inaccurate. Method 400 may then be performed again using the first and second portions of the training data set, using the previously produced positions of the feature points in act 404, to produce a second statistical model. The second statistical model may thereby be produced using the training data set without it being necessary to manually identify all of the feature points for all of the teeth models in the training data set, leading to a more convenient training process.

It may be appreciated that method 400 represents an illustrative approach for determining parameters of a statistical tooth model, and the techniques described herein are not limited to this particular approach. Any suitable method that determines a plurality of parameters that control the shape of a reference tooth to approximate teeth models from a training data set may be employed.

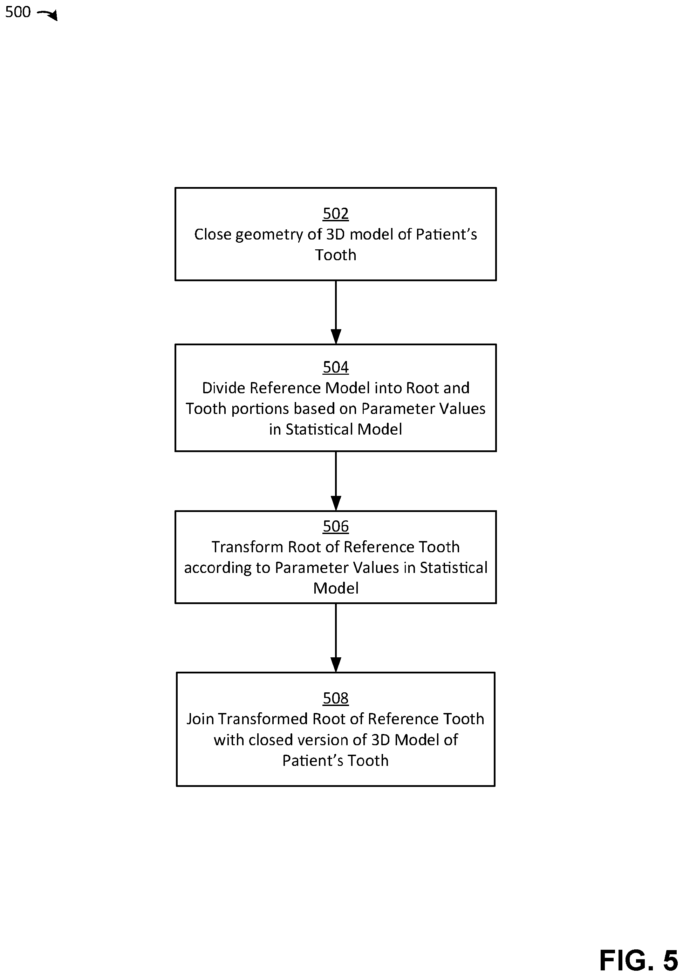

As described above, a root portion may be included in the reference tooth model and a 3D model representing the root portion of the patient's tooth may be generated using the statistical model without it being necessary to perform scanning of the patient's roots. FIG. 5 is a flowchart of a method of generating a root portion of a patient's tooth, according to some embodiments. Method 500 may be performed by a suitable computing system, examples of which are described below, and utilizes an open surface model of a patient's tooth (e.g., produced through optical scanning), in addition to a statistical model that includes a parameterized reference tooth model that includes a root portion.

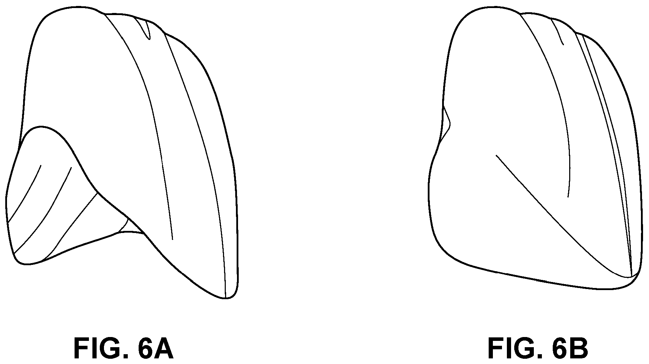

In act 502, the system executing method 500 generated a model in which the open surface model of the patient's tooth is closed. As described above, common scanning techniques may produce a model of a patient's tooth that includes only the tooth portion exposed above the gum, and as such this surface has no bounding surface at the bottom side. FIG. 6A depicts an illustrative example of such a model. In act 502, the surface may be closed to produce, for example, a closed model including the same surface shape from the initial model, with an additional surface that closes the model. FIG. 6B depicts an illustrative example of closing the model shown in FIG. 6A in this manner.

According to some embodiments, closing an open model in act 502 may comprise Poisson Surface Reconstruction. For instance, act 502 may comprise providing a point cloud of the patient's tooth and an estimated normal vector for each point in the point cloud as inputs to a Poisson Surface Reconstruction process, to generate an estimated surface that closes the model as a smooth extension of the open surface model of the patient's tooth.

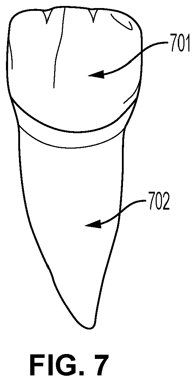

In act 504, the system executing method 500 divides the parameterized reference model to separate the root portion of the model from the tooth (non-root) portion. FIG. 7 depicts an illustrative example of a tooth model that includes a root, with the upper portion 701 being the tooth portion, and the lower portion 702 being the root portion. The dividing operation may produce a new root model either by modifying the reference model, or by producing a new reference model that only includes the root portion. In some embodiments, dividing the parameterized reference model may comprise performing one or more mesh division operations.

According to some embodiments, act 504 may comprise determining an edge between the root portion and tooth portion of the reference model, utilizing values of the parameters of the statistical model determined through analysis of a patient's tooth to which the reference tooth is being matched. For example, method 300 may be performed as described above using the reference model having the root portion, and an edge between the root and tooth portions of the reference model may be determined based on the determined values of the parameters for the statistical model. In this approach, method 300 may be performed using a set of feature points that include a plurality of feature points along the gum line, to determine a new set of parameters of the statistical model.

According to some embodiments, act 504 may comprise generating a point-to-point correspondence between the reference tooth model and the closed model of the patient's tooth generated in act 502. In some embodiments, such a point-to-point correspondence may be generated through a conformal mapping process. For example, meshes of the reference tooth model and the closed model of the patient's tooth may each be mapped to a unit sphere using spherical conformal mapping, and a mapping determined between one or more feature points of the reference tooth model on the unit sphere and one or more feature points of the closed model of the patient's tooth model on the unit sphere.

Irrespective of how the root portion of the reference tooth is identified in act 504, in act 506 the system executing method 500 generates a root portion for the patient's tooth model based on the identified root portion of the reference tooth. In some embodiments, generating the root portion for the patient's tooth model may comprise transforming the identified root portion of the reference tooth based on the values of the parameters of the statistical model determined through analysis of a patient's tooth to which the reference tooth is being matched. While the model of the patient's tooth may not include a root portion, it may be expected that the root portion of the patient's tooth will differ from the root portion of the reference tooth in a similar manner as the tooth portion of the patient's tooth differs from the tooth portion of the reference tooth. As such, the values of the parameters of the statistical model that allow the closest approximation between the tooth portions of the reference tooth and patient's tooth models, may also allow transforming of the root portion of the model produced in act 504 to produce an approximation of the patient's root in act 506.

According to some embodiments, act 506 may comprise using a scattered data interpolation algorithm to generate a root model for the model of the patient's tooth. For example, based on a mapping between certain points (e.g., feature points and/or boundary points) on the closed model of the patient's tooth and the reference model (e.g., a mapping on the unit sphere determined in act 504), the remaining points of the reference model may be interpolated to generate the root model for the patient's tooth. Each input point p to be interpolated may, for instance, be transformed to *f*(*p*) by: $f \left(p\right) = {\sum }_{i} {c}_{i} ϕ \left(\left‖p-{p}_{i}\right‖\right) + Mp + t$ where *ϕ*(*r*) is a radially symmetric basis function, *pᵢ* is each point in the set of feature and/or boundary points in the reference tooth model, and M and *t* are constants. The constants M and t may be determined by solving a set of linear equations that include appropriate constraints, such as Σᵢ *cᵢ* = 0, Σ*ᵢ cᵢpᵢ^{T}* = 0, and *f*(*pᵢ*) = *uᵢ*, where *uᵢ* is the difference between feature points of the reference model and feature points of the patient's tooth. The radially symmetric basis function may, for example, be *ϕ*(*r*) *= e*^{*-r*/64}*.*

In act 508, the root portion for the patient's tooth model generated in act 506 is combined with the tooth portion of the patient's tooth model, which may be the initial open version, or may be the closed version produced in act 502. Joining the two 3D models to produce a new 3D model may be performed in any suitable manner, including using a Boolean combine operation. In some embodiments, the root portion for the patient's tooth model generated in act 506 is not be explicitly joined with the tooth portion of the patient's tooth model, but rather their data is treated together as a single unit.

As a result of method 500, a root portion for a patient's tooth model may be approximated using the statistical model described above. The model of the patient's tooth including a root portion may be utilized in subsequent orthodontic treatment planning processes, including planning of teeth movement. For instance, a process of determining bracket placement on a patient's teeth may be based on models of the patient's teeth, one or more of which include root portions.

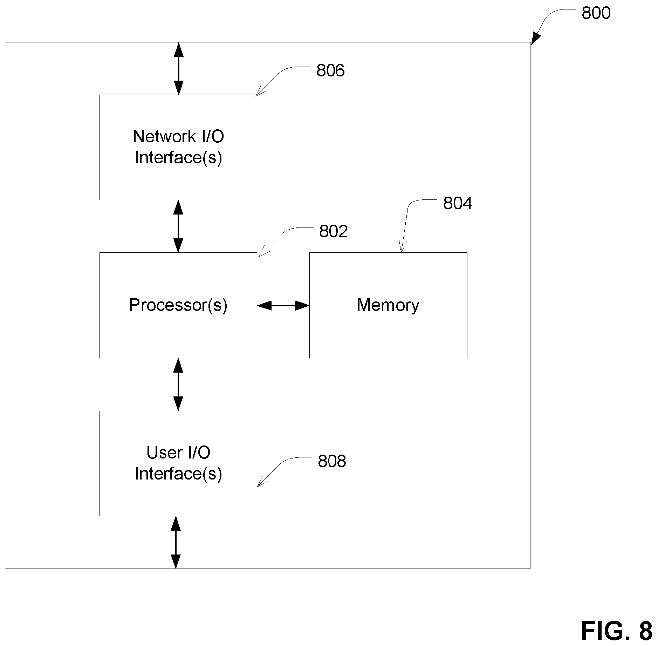

In some embodiments, systems and techniques described herein may be implemented using one or more computing devices. In particular, a computing device may be operated to perform method 300, including determining values of parameters for a statistical model, method 400 and/or method 500, as described above. Embodiments are not, however, limited to operating with any particular type of computing device. By way of further illustration, FIG. 8 is a block diagram of an illustrative computing device 800. Computing device 800 may include one or more processors 802 and one or more tangible, non-transitory computer-readable storage media (e.g., memory 804). Memory 804 may store, in a tangible non-transitory computer-recordable medium, computer program instructions that, when executed, implement any of the above-described functionality. Processor(s) 802 may be coupled to memory 804 and may execute such computer program instructions to cause the functionality to be realized and performed.

Computing device 800 may also include a network input/output (I/O) interface 806 via which the computing device may communicate with other computing devices (e.g., over a network), and may also include one or more user I/O interfaces 808, via which the computing device may provide output to and receive input from a user. The user I/O interfaces may include devices such as a keyboard, a mouse, a microphone, a display device (e.g., a monitor or touch screen), speakers, a camera, and/or various other types of I/O devices.

The above-described embodiments can be implemented in any of numerous ways. As an example, the embodiments may be implemented using hardware, software or a combination thereof. When implemented in software, the software code can be executed on any suitable processor (e.g., a microprocessor) or collection of processors, whether provided in a single computing device or distributed among multiple computing devices. It should be appreciated that any component or collection of components that perform the functions described above can be generically considered as one or more controllers that control the above-described functions. The one or more controllers can be implemented in numerous ways, such as with dedicated hardware, or with general purpose hardware (e.g., one or more processors) that is programmed using microcode or software to perform the functions recited above.

In some embodiments, a software-based application may be connected (e.g., via a wired or wireless connection) to one or more components of a computing device. In certain embodiments, for example, the computing device 800 may be controlled, at least in part, by a software-based application. In some cases, a user may operate a graphical user interface to perform one or more acts of method 300, 400 and/or 500 through the software-based application (e.g., identifying feature point positions in act 404). In some cases, the software-based application may store information (e.g., feature point positions) generated based on user input.

In this respect, it should be appreciated that one implementation of the embodiments described herein comprises at least one computer-readable storage medium (e.g., RAM, ROM, EEPROM, flash memory or other memory technology, CD-ROM, digital versatile disks (DVD) or other optical disk storage, magnetic cassettes, magnetic tape, magnetic disk storage or other magnetic storage devices, or other tangible, non-transitory computer-readable storage medium) encoded with a computer program (i.e., a plurality of executable instructions) that, when executed on one or more processors, performs the above-described functions of one or more embodiments. The computer-readable medium may be transportable such that the program stored thereon can be loaded onto any computing device to implement aspects of the techniques described herein. In addition, it should be appreciated that the reference to a computer program which, when executed, performs any of the above-described functions, is not limited to an application program running on a host computer. Rather, the terms computer program and software are used herein in a generic sense to reference any type of computer code (e.g., application software, firmware, microcode, or any other form of computer instruction) that can be employed to program one or more processors to implement aspects of the techniques described herein.

Having thus described several aspects of at least one embodiment of this invention, it is to be appreciated that various alterations, modifications, and improvements will readily occur to those skilled in the art.

Such alterations, modifications, and improvements are intended to be part of this disclosure. Further, though advantages of the present invention are indicated, it should be appreciated that not every embodiment of the technology described herein will include every described advantage. Some embodiments may not implement any features described as advantageous herein and in some instances one or more of the described features may be implemented to achieve further embodiments. Accordingly, the foregoing description and drawings are by way of example only.

The above-described embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or coprocessor. Alternatively, a processor may be implemented in custom circuitry, such as an ASIC, or semi-custom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. Though, a processor may be implemented using circuitry in any suitable format.

Various aspects of the present invention may be used alone, in combination, or in a variety of arrangements not specifically described in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by a "user." It should be appreciated that a "user" need not be a single individual, and that in some embodiments, actions attributable to a "user" may be performed by a team of individuals and/or an individual in combination with computer-assisted tools or other mechanisms.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The terms "approximately" and "about" may be used to mean within ±20% of a target value in some embodiments, within ±10% of a target value in some embodiments, within ±5% of a target value in some embodiments, and yet within ±2% of a target value in some embodiments. The terms "approximately" and "about" may include the target value. The term "substantially equal" may be used to refer to values that are within ±20% of one another in some embodiments, within ±10% of one another in some embodiments, within ±5% of one another in some embodiments, and yet within ±2% of one another in some embodiments.

The term "substantially" may be used to refer to values that are within ±20% of a comparative measure in some embodiments, within ±10% in some embodiments, within ±5% in some embodiments, and yet within ±2% in some embodiments. For example, a first direction that is "substantially" perpendicular to a second direction may refer to a first direction that is within ±20% of making a 90° angle with the second direction in some embodiments, within ±10% of making a 90° angle with the second direction in some embodiments, within ±5% of making a 90° angle with the second direction in some embodiments, and yet within ±2% of making a 90° angle with the second direction in some embodiments.

Also, the phraseology and terminology used herein is for the purpose of description and should not be regarded as limiting. The use of "including," "comprising," or "having," "containing," "involving," and variations thereof herein, is meant to encompass the items listed thereafter as well as additional items

## Claims

1. A computer-implemented method of determining positions of a plurality of feature points (101-104; 214) of a patient's tooth based on a statistical tooth model (205), the method comprising:
using at least one processor:
determining values of a plurality of parameters of the statistical tooth model (205) by comparing a three-dimensional, 3D, model of a reference tooth, which has a shape parametrized by the plurality of parameters, to a 3D model of a patient's tooth (201);
determining positions (220) of a plurality of feature points (101-104; 214) for the patient's tooth based at least in part on a plurality of feature points (101-104; 214) associated with the statistical tooth model (205), and at least in part on the determined values of the plurality of parameters of the statistical tooth model (205); and
associating the plurality of feature points (101-104; 214) for the patient's tooth with the 3D model of the patient's tooth (201) according to the determined positions (202) of the plurality of feature points (101-104; 214).

2. The method of claim 1, wherein determining the values of the plurality of parameters of the statistical tooth model (205) comprises identifying, for each point of a plurality of points on the 3D model of the reference tooth, a point on the 3D model of the patient's tooth (201) that is closest to the point on the 3D model of the reference tooth.

3. The method of claim 2, wherein determining the values of the plurality of parameters of the statistical tooth model (205) further comprises measuring a difference between the 3D model of the patient's tooth (201) and the 3D model of the reference tooth by comparing the plurality of points on the 3D model of the reference tooth to the plurality of identified points on the 3D model of the patient's tooth (201).

4. The method of claim 3, wherein determining the values of the plurality of parameters of the statistical tooth model (205) further comprises optimizing the plurality of parameters of the statistical tooth model (205) based on the measured differences between the 3D model of the patient's tooth (201) and the 3D model of the reference tooth.

5. The method of claim 1, wherein the plurality of parameters of the statistical tooth model (205) include a plurality of principal components of a principle component analysis (PCA) model.

6. The method of claim 1, wherein determining the positions of the plurality of feature points (101-104; 214) for the patient's tooth comprises transforming the plurality of feature points (101-104; 214) associated with the statistical tooth model (205) according to the determined values of the plurality of parameters.

7. The method of claim 1, wherein determining the positions of the plurality of feature points (101-104; 214) for the patient's tooth comprises identifying positions of the plurality of feature points (101-104; 214) associated with the statistical tooth model (205) relative to the 3D model of the reference tooth, whereby the 3D model of the reference tooth has a shape according to the determined values of the plurality of parameters.

8. The method of claim 1, wherein the plurality of feature points (101-104; 214) for the patient's tooth comprise one or more premolar cusps, molar cusps, facial axis points, marginal ridge points, fossa points and/or centroid points.

9. The method of claim 1, further comprising generating the statistical tooth model (205) by:
obtaining a plurality of reference 3D tooth models (210);
determining the plurality of parameters based on the plurality of reference 3D tooth models (210).

10. The method of claim 9, wherein determining the plurality of parameters comprises performing a principal component analysis, PCA, of the plurality of reference 3D tooth models (210).

11. The method of claim 1, wherein the statistical tooth model (205) is defined for, and wherein the reference tooth and patient's tooth are: an incisor, canine, premolar or molar tooth.

12. The method of claim 1, further comprising generating a root model for the 3D model of the patient's tooth (201) based on the statistical tooth model (205) and the determined values of the plurality of parameters of the statistical tooth model (205), wherein generating the root model preferably comprises transforming a 3D model of the reference tooth that includes a root portion according to the plurality of parameters of the statistical tooth model (205).

13. The method of claim 1, further comprising determining one or more orthodontic treatments based on the 3D model of the patient's tooth (201) and associated plurality of feature points (101-104; 214).

14. At least one computer readable medium comprising instructions that, when executed by at least one processor, perform a method according to any one of claims 1 to 13.

15. A system comprising:
at least one processor; and
at least one computer readable medium comprising instructions that, when executed by the at least one processor, perform a method according to any one of claims 1 to 13.

## Patentansprüche

1. Computerimplementiertes Verfahren zum Ermitteln von Positionen einer Mehrzahl von Merkmalspunkten (101-104; 214) eines Patientenzahns auf der Grundlage eines statistischen Zahnmodells (205), wobei das Verfahren umfasst:
unter Verwendung mindestens eines Prozessors:
Ermitteln von Werten einer Mehrzahl von Parametern des statistischen Zahnmodells (205) durch Vergleichen eines dreidimensionalen, 3D, Modells eines Referenzzahns, dessen Form durch die Mehrzahl von Parametern parametriert ist, mit einem 3D-Modell eines Patientenzahns (201);
Ermitteln von Positionen (220) einer Mehrzahl von Merkmalspunkten (101-104; 214) für den Patientenzahn zumindest teilweise auf der Grundlage einer Mehrzahl von Merkmalspunkten (101-104; 214), die zu dem statistischen Zahnmodell (205) gehören, und zumindest teilweise der ermittelten Werte der Mehrzahl von Parametern des statistischen Zahnmodells (205); und
Zuordnen der Mehrzahl von Merkmalspunkten (101-104; 214) für den Patientenzahn zu dem 3D-Modell des Patientenzahns (201) gemäß den ermittelten Positionen (202) der Mehrzahl von Merkmalspunkten (101-104; 214).

2. Verfahren nach Anspruch 1, wobei das Ermitteln der Werte der Mehrzahl von Parametern des statistischen Zahnmodells (205), für jeden Punkt einer Mehrzahl von Punkten auf dem 3D-Modell des Referenzzahns, ein Identifizieren eines Punktes auf dem 3D-Modell des Patientenzahns (201) umfasst, der dem Punkt auf dem 3D-Modell des Referenzzahns am nächsten liegt.

3. Verfahren nach Anspruch 2, wobei das Ermitteln der Werte der Mehrzahl von Parametern des statistischen Zahnmodells (205) weiter ein Messen einer Differenz zwischen dem 3D-Modell des Patientenzahns (201) und dem 3D-Modell des Referenzzahns umfasst, indem die Mehrzahl von Punkten auf dem 3D-Modell des Referenzzahns mit der Mehrzahl von identifizierten Punkten auf dem 3D-Modell des Patientenzahns (201) verglichen wird.

4. Verfahren nach Anspruch 3, wobei das Ermitteln der Werte der Mehrzahl von Parametern des statistischen Zahnmodells (205) weiter ein Optimieren der Mehrzahl von Parametern des statistischen Zahnmodells (205) auf der Grundlage der gemessenen Differenzen zwischen dem 3D-Modell des Patientenzahns (201) und dem 3D-Modell des Referenzzahns umfasst.

5. Verfahren nach Anspruch 1, wobei die Mehrzahl von Parametern des statistischen Zahnmodells (205) eine Mehrzahl von Hauptkomponenten eines Hauptkomponentenanalyse(PCA)-Modells umfasst.

6. Verfahren nach Anspruch 1, wobei das Ermitteln der Positionen der Mehrzahl von Merkmalspunkten (101-104; 214) für den Patientenzahn ein Transformieren der Mehrzahl von Merkmalspunkten (101-104; 214), die zu dem statistischen Zahnmodell (205) gehören, gemäß den ermittelten Werten der Mehrzahl von Parametern umfasst.

7. Verfahren nach Anspruch 1, wobei das Ermitteln der Positionen der Mehrzahl von Merkmalspunkten (101-104; 214) für den Patientenzahn ein Identifizieren von Positionen der Mehrzahl von Merkmalspunkten (101-104; 214), die zu dem statistischen Zahnmodell (205) gehören, in Bezug auf das 3D-Modell des Referenzzahns umfasst, wodurch das 3D-Modell des Referenzzahns eine Form gemäß den ermittelten Werten der Mehrzahl von Parametern aufweist.

8. Verfahren nach Anspruch 1, wobei die Mehrzahl von Merkmalspunkten (101-104; 214) für den Patientenzahn einen oder mehrere Prämolarenhöcker, Molarenhöcker, Gesichtsachsenpunkte, Randkammpunkte, Fossa-Punkte und/oder Schwerpunkte umfasst.

9. Verfahren nach Anspruch 1, weiter umfassend ein Erzeugen des statistischen Zahnmodells (205) durch:
Erhalten einer Mehrzahl von 3D-Referenzzahnmodellen (210);
Ermitteln der Mehrzahl von Parametern auf der Grundlage der Mehrzahl von 3D-Referenzzahnmodellen (210).

10. Verfahren nach Anspruch 9, wobei das Ermitteln der Mehrzahl von Parametern ein Durchführen einer Hauptkomponentenanalyse, PCA, der Mehrzahl von 3D-Referenzzahnmodellen (210) umfasst.

11. Verfahren nach Anspruch 1, wobei das statistische Zahnmodell (205) für den Referenzzahn und den Patientenzahn definiert ist und wobei es sich bei diesen handelt um: einen Schneidezahn, einen Eckzahn, einen Prämolaren oder einen Molaren.

12. Verfahren nach Anspruch 1, weiter umfassend Erzeugen eines Wurzelmodells für das 3D-Modell des Patientenzahns (201) auf der Grundlage des statistischen Zahnmodells (205) und der ermittelten Werte der Mehrzahl von Parametern des statistischen Zahnmodells (205), wobei das Erzeugen des Wurzelmodells vorzugsweise ein Transformieren eines 3D-Modells des Referenzzahns, das einen Wurzelabschnitt aufweist, gemäß der Mehrzahl von Parametern des statistischen Zahnmodells (205) umfasst.

13. Verfahren nach Anspruch 1, weiter umfassend Ermitteln einer oder mehrerer kieferorthopädischer Behandlungen auf der Grundlage des 3D-Modells des Patentenzahns (201) und einer zugehörigen Mehrzahl von Merkmalspunkten (101-104; 214).

14. Mindestens ein computerlesbares Medium, das Anweisungen umfasst, die beim Ausführen durch mindestens einen Prozessor ein Verfahren nach einem der Ansprüche 1 bis 13 durchführen.

15. System, umfassend:
mindestens einen Prozessor; und
mindestens ein computerlesbares Medium, das Anweisungen umfasst, die beim Ausführen durch den mindestens einen Prozessor ein Verfahren nach einem der Ansprüche 1 bis 13 durchführen.

## Revendications

1. Procédé mis en œuvre par ordinateur de détermination de positions d'une pluralité de points caractéristiques (101-104 ; 214) d'une dent d'un patient sur la base d'un modèle de dent statistique (205), le procédé comprenant :
l'utilisation d'au moins un processeur :
la détermination de valeurs d'une pluralité de paramètres du modèle de dent statistique (205) par comparaison d'un modèle tridimensionnel, 3D, d'une dent de référence, laquelle a une forme paramétrée par la pluralité de paramètres, à un modèle 3D d'une dent du patient (201) ;
la détermination de positions (220) d'une pluralité de points caractéristiques (101-104 ; 214) pour la dent du patient sur la base au moins en partie d'une pluralité de points caractéristiques (101-104 ; 214) associés au modèle de dent statistique (205), et au moins en partie des valeurs déterminées de la pluralité de paramètres du modèle de dent statistique (205) ; et
l'association de la pluralité de points caractéristiques (101-104 ; 214) pour la dent du patient au modèle 3D de la dent du patient (201) selon les positions déterminées (202) de la pluralité de points caractéristiques (101-104 ; 214).

2. Procédé selon la revendication 1, dans lequel la détermination des valeurs de la pluralité de paramètres du modèle de dent statistique (205) comprend l'identification, pour chaque point d'une pluralité de points sur le modèle 3D de la dent de référence, d'un point sur le modèle 3D de la dent du patient (201) qui est le plus proche du point sur le modèle 3D de la dent de référence.

3. Procédé selon la revendication 2, dans lequel la détermination des valeurs de la pluralité de paramètres du modèle de dent statistique (205) comprend en outre la mesure d'une différence entre le modèle 3D de la dent du patient (201) et le modèle 3D de la dent de référence par comparaison de la pluralité de points sur le modèle 3D de la dent de référence à la pluralité de points identifiés sur le modèle 3D de la dent du patient (201).

4. Procédé selon la revendication 3, dans lequel la détermination des valeurs de la pluralité de paramètres du modèle de dent statistique (205) comprend en outre l'optimisation de la pluralité de paramètres du modèle de dent statistique (205) sur la base des différences mesurées entre le modèle 3D de la dent du patient (201) et le modèle 3D de la dent de référence.

5. Procédé selon la revendication 1, dans lequel la pluralité de paramètres du modèle de dent statistique (205) comporte une pluralité de composantes principales d'un modèle d'analyse de composantes principales (PCA).

6. Procédé selon la revendication 1, dans lequel la détermination des positions de la pluralité de points caractéristiques (101-104 ; 214) pour la dent du patient comprend la transformation de la pluralité de points caractéristiques (101-104 ; 214) associés au modèle de dent statistique (205) selon les valeurs déterminées de la pluralité de paramètres.

7. Procédé selon la revendication 1, dans lequel la détermination des positions de la pluralité de points caractéristiques (101-104 ; 214) pour la dent du patient comprend l'identification de positions de la pluralité de points caractéristiques (101-104 ; 214) associés au modèle de dent statistique (205) par rapport au modèle 3D de la dent de référence, sachant que le modèle 3D de la dent de référence a une forme selon les valeurs déterminées de la pluralité de paramètres.

8. Procédé selon la revendication 1, dans lequel la pluralité de points caractéristiques (101-104 ; 214) pour la dent du patient comprend une ou plusieurs cuspides prémolaires, cuspides molaires, points d'axe facial, points de crête marginale, points de fosse et/ou points centroïdes.

9. Procédé selon la revendication 1, comprenant en outre la génération du modèle de dent statistique (205) par :
l'obtention d'une pluralité de modèles de dent 3D de référence (210) ;
la détermination de la pluralité de paramètres sur la base de la pluralité de modèles de dent 3D de référence (210).

10. Procédé selon la revendication 9, dans lequel la détermination de la pluralité de paramètres comprend la réalisation d'une analyse de composantes principales, PCA, de la pluralité de modèles de dent 3D de référence (210).

11. Procédé selon la revendication 1, dans lequel le modèle de dent statistique (205) est défini pour, et dans lequel la dent de référence et la dent du patient sont : une incisive, une canine, une prémolaire ou une molaire.

12. Procédé selon la revendication 1, comprenant en outre la génération d'un modèle de racine pour le modèle 3D de la dent du patient (201) sur la base du modèle de dent statistique (205) et des valeurs déterminées de la pluralité de paramètres du modèle de dent statistique (205), dans lequel la génération du modèle de racine comprend de préférence la transformation d'un modèle 3D de la dent de référence qui comporte une partie racine selon la pluralité de paramètres du modèle de dent statistique (205).

13. Procédé selon la revendication 1, comprenant en outre la détermination d'un ou plusieurs traitements orthodontiques sur la base du modèle 3D de la dent du patient (201) et de la pluralité associée de points caractéristiques (101-104 ; 214).

14. Au moins un support lisible par ordinateur comprenant des instructions qui, lorsqu'elles sont exécutées par au moins un processeur, réalisent un procédé selon l'une quelconque des revendications 1 à 13.

15. Système comprenant :
au moins un processeur ; et
au moins un support lisible par ordinateur comprenant des instructions qui, lorsqu'elles sont exécutées par l'au moins un processeur, réalisent un procédé selon l'une quelconque des revendications 1 à 13.
